**Europäisches Patentamt**

**European Patent Office**

**Office européen des brevets**

(19)

(11) Veröffentlichungsnummer : **0 097 927**
**B1**

(12)

# EUROPÄISCHE PATENTSCHRIFT

(45) Veröffentlichungstag der Patentschrift :
30.09.87

(51) Int. Cl.⁴ : **H 04 N   3/08, H 04 N   5/225**

(21) Anmeldenummer : 83106189.0

(22) Anmeldetag : 24.06.83

(54) Fernsehkamera für digitale On-line-Bildauswertung.

(30) Priorität : 26.06.82 DE 3223971

(43) Veröffentlichungstag der Anmeldung :
11.01.84 Patentblatt 84/02

(45) Bekanntmachung des Hinweises auf die Patenterteilung : 30.09.87 Patentblatt 87/40

(84) Benannte Vertragsstaaten :
CH FR GB IT LI SE

(56) Entgegenhaltungen :
US-A- 4 255 762
SCIENTIFIC AMERICAN, Band 230, Heft 2; Februar
1974, NEW-YORK, US, Seiten 23-31: G.AMELIO:
"Charge-Coupled Devices"

(73) Patentinhaber : **Schäfter & Kirchhoff**
**Luruper Hauptstrasse 254**
**D-2000 Hamburg 53 (Lurup) (DE)**

(72) Erfinder : **Federau, Gregor**
**Eichenstrasse 86**
**D-2000 Hamburg 19 (DE)**

(74) Vertreter : **Dipl.-Ing. H. Hauck Dipl.-Phys. W. Schmitz**
**Dipl.-Ing. E. Graalfs Dipl.-Ing. W. Wehnert Dr.-Ing. W.**
**Döring**
**Neuer Wall 41**
**D-2000 Hamburg 36 (DE)**

**Beschreibung**

Die Erfindung betrifft eine Fernsehkamera nach dem Oberbegriff des Anspruchs 1.

Die On-line-Bildverarbeitung erfordert hohe Bearbeitungsgeschwindigkeiten. Dazu ist es erforderlich, die Vorverarbeitungsoperationen durch Anpassung des Fernsehbildes an die Mustererkennungsaufgabe zu minimieren. Insbesondere sind eine homogene Grauwertverteilung des Fernsehbild-Untergrundes, ein hoher Kontrast der Fernsehbild-Einzelheiten, eine einfache Geometrie des Fernsehbildes und eine Reduktion der Fernsehbilddaten auf die auszuwertenden Gegenstandsbereiche anzustreben. Bei Relativbewegungen zwischen Gegenstand und Kamera bereitet die störungsfreie Übertragung der Steuer- und Bildsignale Schwierigkeiten.

Es sind Fernsehkameras der angegebenen Art vorgeschlagen worden, bei denen zum Herstellen von Luftaufnahmen der Zeilensensor an Bord eines Flugzeuges oder Satelliten vorgesehen wird ; dabei ergibt sich die (senkrecht zur Erstreckung des Zeilensensors vorzunehmende) Relativbewegung in Form der Bewegung des Flugzeuges oder Satelliten relativ zu dem auf dem Boden befindlichen Gegenstandsbereich. Es ist ferner in derselben Veröffentlichung (Aufsatz von Gilbert F. Amelio « CHARGE-COUPLED DEVICES » in Scientific American 230 (1974) Heft 2, Seiten 23-31) vorgeschlagen worden, die Relativbewegung dadurch zu verwirklichen, daß man einen zu erfassenden zweidimensionalen Gegenstandsbereich auf dem Umfang einer rotierenden Trommel vorsieht und vor der Trommeloßerfläche einen stationären Zeilensensor achsparallel anordnet, gegebenenfalls unter Zwischenschaltung eines optischem Abbildungssystems. Diese Anordnung ist nur bei Gegenstandsbereichen brauchbar, die auf der Oberfläche einer rotierenden Trommel angeordnet sind oder werden können. Meist wird dies nicht der Fall sein, insbesondere dann nicht, wenn veränderliche Gegenstandsbereiche erfaßt werden sollen ; dafür ist die bekannte Anordnung grundsätzlich ungeeignet. Natürlich wäre bei dem bekannten System auch die umgekehrte Anordnung möglich, also ein Bewegen des Zeilensensors auf einer Umlaufbahn vor der dann stationären Trommelumfangsfläche ; diese naheliegende Umkehr würde aber einen beträchtlich höheren Aufwand erfordern, weil für die Erzielung der Umlaufbewegung aufwendige mechanische Einrichtungen erforderlich sind, und weil die von dem bewegten Zeilensensor abgegebenen Signale über Schleifkontakte oder dergleichen abgenommen und zu den normalerweise stationären Display-Einrichtungen geleitet werden müßten. Diesem beträchtlichen Mehraufwand stünde ein vergleichbarer Vorteil nicht gegenüber. Die bekannte Anordnung legt somit den Schluß nahe, daß man nach Möglichkeit den Zeilensensor stationär anordnen soll.

Die vorliegende Erfindung geht von der Aufgabe aus, eine für einen breiteren Anwendungsbereich vorteilhafte On-line-Fernsehkamera mit Zeilensensor zu schaffen.

Nach der Erfindung wird diese Aufgabe gelöst mit einer Fernsehkamera der eingangs angegebenen Art, die dadurch gekennzeichnet ist, daß zum Erfassen eines um eine Panoramaachse herum verteilten optischen Gegenstandes und zur Erzeugung der Relativbewegung der Zeilensensor um das optische Bild der Panoramaachse drehantreibbar ist und derart angeordnet ist, daß die Sensorflächen in den optischen Bildern von axial gegeneinander versetzten Elementen des Gegenstandsbereichs liegen und bei der Drehung des Zeilensensors jede Sensorfläche eine zu der Panoramaachse rotationssymmetrische Abtastzeile definiert, und daß der Ausgang des Zeilensensors über eine mehrkanalige berührungslose optische Drehkupplung mit der Betriebsschaltung verbunden ist.

Die erfindungsgemäße Fernsehkamera ermöglicht in sehr einfacher Weise die Erzeugung von On-line-Panorama-Fernsehbildern mit großem Bildwinkel mit einfacher und genauer geometrischer Zuordnung zwischen Gegenstand und Bild. Die Bauelemente der Kamera können sehr robust und klein ausgeführt werden, so daß auch verhältnismäßig enge Hohlkörper untersucht werden können. Gegenüber diesen sehr wesentlichen Vorteilen fällt die Notwendigkeit, die von dem Zeilensensor gelieferten Signale über eine Drehkupplung auszukoppeln, nicht ins Gewicht. Überdies ist bei der erfindungsgemäßen Fernsehkamera eine berührungslose mehrkanalige optische Drehkupplung vorgesehen, die hohe Signalbandbreiten störungsfrei übertragen kann und somit die für On-line-Bildauswertung erforderlichen und erwünschten hohen Bearbeitungsgeschwindigkeiten möglich macht.

Die erfindungsgemäße Fernsehkamera bietet auch entscheidende Vorteile gegenüber anderen vorbekannten On-line-Fernsehkameras, bei denen der Bildbereich (das optische Bild) mit Hilfe eines Energiestrahls abgetastet wird. Die dafür erforderlichen Einrichtungen, insbesondere Hochvakuumteile, sind erheblich aufwendiger, voluminöser und mechanisch empfindlicher als die Teile der erfindungsgemäßen Fernsehkamera. Das bei der erfindungsgemäßen Kamera angewandte Abtastprinzip und die sich daraus ergebenden entscheidenden Vorteile hinsichtlich der geometrischen Genauigkeit des Bildes sind bei vorbekannten Fernsehkameras mit Energiestrahl-Abtastung nicht verwirklicht und auch grundsätzlich nicht erzielbar. Man könnte zwar auch bei Energiestrahl-Abtastung die geometrischen Fehler dadurch verkleinern, daß man eine bis auf einen Schlitz abgeblendete herkömmliche Fernsehkamera verwendet, doch wäre eine solche Lösung noch erheblich aufwendiger als die Technik mit ruhender herkömmlicher Fernsehkamera mit Energiestrahl-Abtastung.

Bei der erfindungsgemäßen Fernsehkamera besteht weiter der Vorteil, daß durch die Drehung des Zeilensensors um die Panorama-Achse kein mechanisch-optisches System wie z. B. ein mit halber Winkelgeschwindigkeit rotierendes Dove-Prisma, zum Ausgleich der Bilddrehung erforderlich ist. Die geometrische Beziehung zwischen den Gegenstandselementen und den Elementen des optischen Bildes ist sehr einfach ; die sonst bei Weitwinkelaufnahmen vorliegenden Verzerrungsprobleme sind grundsätzlich vermieden.

Es ist ferner ein Endoskop bekannt (DE-OS 26 33 742), bei welchem von einem optischen System ein Bild eines zu betrachtenden Gegenstandes auf einem Festkörper-Bildaufnahmeelement erzeugt und dieses zur Abtastung des Bildes und zum Erzeugen entsprechender elektrischer Signale gesteuert wird. Dabei erfaßt jedoch das Bildaufnahmeelement nicht nur eine Zeile des Bildes, sondern das ganze Bild, und das Bildaufnahmeelement wird nicht gedreht. Ein mit Panorama-Aufnahmen vergleichbarer Bildwinkel kann auf diese Weise nicht erzielt werden, vielmehr hängt der erfaßbare Bildwinkel von dem optischem System ab. Eine von geometrischen Fehlern freie direkte Abtastung eines Panoramas findet nicht statt.

Vorzugsweise ist bei der erfindungsgemäßen Fernsehkamera das optische Abbildungssystem in einem Kamerakopf geschützt angeordnet. Der Kamerakopf kann freizügig gestaltet werden, insbesondere mit einem langen und verhältnismäßig dünnen Rohr, so daß sich die Kamera besonders gut für endoskopische Anwendungen eignet. Vorzugsweise ist der Kamerakopf um die Panoramaachse drehbar, und das optische Abbildungssystem und der Zeilensensor sind in dem Kamerakopf fest angeordnet. Bei dieser Bauweise kann der Drehantrieb außen vorgesehen und einfacher gestaltet werden.

Bei der Verwendung wird die Kamera normalerweise mehrere Gegenstandsbereiche nacheinander abtasten, beispielsweise durch Bewegen der Kamera oder des erwähnten Kamerakopfes in Richtung der Panoramaachse. Zu diesem Zweck kann der erwähnte Kamerakopf an der Kamera in Richtung der Panoramaachse axialbeweglich gelagert sein. Dadurch ergibt sich der vorteil, daß die Kamera fest in einer Maschine angeordnet werden kann ; die zum Abtasten eines länglichen Hohlkörpers erforderlichen Bewegungen werden dann allein von dem Kamerakopf durchgeführt. Die Abtastung des Gegenstandes in der Richtung der Panoramaachse kann gleichmäßig während der Drehung des optischen Abbildungssystems erfolgen, — dann wird als Gegenstandsbereich ein kontinuierliches Schraubenband abgetastet — oder absatzweise zwischen Rundum-Abtastungen mit fester Axiallage, — dann sind die abgetasteten Gegenstandsbereiche Kreiszylinderflächen.

Die Erfindung wird im folgenden anhand eines Ausführungsbeispiels in Verbindung mit den Zeichnungen näher erläutert. Es zeigt :

Figur 1 eine schematische perspektivische Phantom-Darstellung, mit teilweise weggebrochenen Teilen, nach Art einer Seitenansicht einer erfindungsgemäßen Kamera,

Figur 2 eine schematische Erläuterung, nach Art einer Draufsicht, des grundsätzlichen Aufbaus eines Zeilensensors,

Figur 3 eine schematische Erläuterung, nach Art einer radialen Teil-Draufsicht, des mit der Vorrichtung nach Fig. 1 abgetasteten Gegenstandsbereichs,

Figur 4 eine teilweise geschnittene schematische Darstellung einer für die erfindungsgemäße Kamera geeigneten optischen Drehkupplung,

Figur 5 ein Schaubild zur Erläuterung der Arbeitsweise der Kamera.

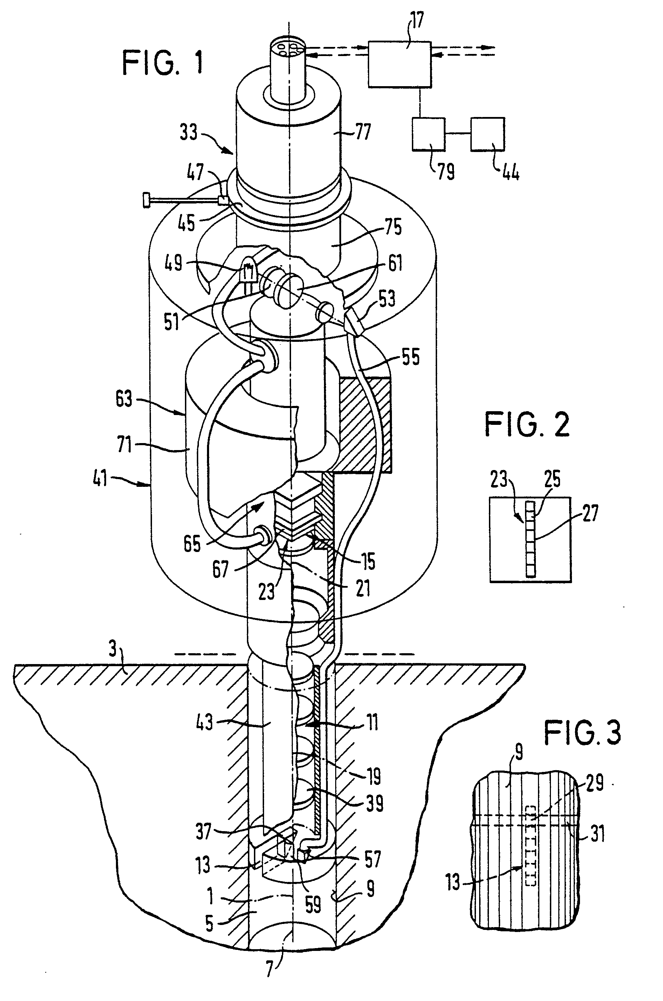

Figuren 1 bis 3 erläutern schematisch eine Fernsehkamera für digitale On-line-Bildverarbeitung. Die Kamera ist zum Erfassen eines um eine Panoramaachse 1 herum verteilten optischen Gegenstandes ausgebildet. Bei dem dargestellten Ausführungsbeispiel bildet die Kamera einen Teil eines Endoskops und dient zum Erfassen der Innenseite eines Hohlkörpers 3, dessen Hohlraum 5 in dem dargestellten Fall um eine Gegenstandsachse 7 rotationssymmetrisch ist. Somit bildet hier die Innenseite des Hohlkörpers 3 den optischen Gegenstand 9. In dem dargestellten Fall wird zweckmäßigerweise die von der Kamera definierte Panoramaachse 1 koaxial zu der Gegenstandsachse 7 angeordnet, wie dargestellt. Die Kamera hat ein optisches Abbildungssystem 11, das einen von der Kamera erfaßten Gegenstandsbereich 13, hier einen Teil der Innenfläche des Hohlkörpers 5, in einen elementweise abtastbaren Bildbereich 15 abbildet. Die Kamera hat. eine Betriebsschaltung 17, die aus den beim Abtasten gewonnenen Signalen Videosignale erzeugt ; diese können ihrerseits zum Erzeugen eines Fernsehbildes oder zur Verarbeitung in Rechnern und dergleichen verwendet werden.

Bei der dargestellten Ausführungsform hat das Abbildungssystem 11 eine Abbildungsachse 19, die koaxial zu der Panoramaachse 1 angeordnet ist, und das optische Bild 21 der Panoramaachse liegt koaxial zu der Panoramaachse 1. Diese Anordnung ist sehr platzsparend und erleichtert den Einbau der wichtigsten Teile der Kamera in ein für endoskopische Zwecke geeignetes enges Rohr.

In dem Bildbereich 15 ist eine zeilenförmige Empfangsfläche eines um die Panoramaachse 1 drehantreibbaren Zeilensensors 23 angeordnet, der sich aus Sensorflächen 25 einer Reihe von optischelektrischen Wandlern 27 derart zusammensetzt, daß die Sensorflächen in den (je nach Auslegung des optischen Abbildungssystems gewünschtenfalls vergrößerten oder verkleinerten) optischen Bildern von axial gegeneinander versetzten gedachten Elementen 29 des Gegenstandsbereichs 13 liegen und jede Wandler-Sensorfläche 25 bei der Drehung des Zeilensensors 23 um das optische Bild 21 der Panoramaachse 1 eine zu der Panoramaachse 1 rotationssymmetrische Abtastzeile, zum Beispiel 31, auf dem Gegenstand 11 definiert. Der Zeilensensor enthält eine (nicht im einzelnen dargestellte) Verarbeitungsschaltung, die dafür sorgt, daß bei Einspeisen eines Abfragesignals die Ausgangssignale der einzelnen Wandler 27 nacheinander abgerufen und einer Trägerfrequenz von zum Beispiel 10 MHz aufmoduliert werden. Das auf diese Weise erzeugte hochfrequente primäre Bildsignal wird — ebenso wie die Abrufsignale und andere Steuer- und Synchronisiersignale — über eine mehrkanalige berührungsfreie optische Drehkupplung 33 geleitet und gelangt über diese zu der Betriebsschaltung 17, die ihrerseits Videosignale erzeugt und an ein nachgeschaltetes Bit-Verarbeitungssystem (nicht dargestellt) liefert.

Bei der dargestellten Ausführungsform ist der erfaßte Gegenstandsbereich 13 auf einen verhältnismäßig kleinen Winkel um die optische Achse 19, d. h. ein schmales streifenförmiges Flächenstück mit Orientierung parallel zur optischen Achse 19, beschränkt, beispielsweise durch die Abmessung des Zeilensensors und den Abbildungsmaßstab, und die abbildenden Strahlen werden durch eine optische Ablenkeinrichtung 37, hier in Form eines Umlenkprismas, um 90° in die optische Achse 19 hinein abgelenkt. Diese Anordnung ergibt weniger geometrische Verzerrungen als eine Anordnung ohne Ablenkeinrichtung 37. Damit das Abbildungssystem 11 auf verschiedene Gegenstandsbereiche (vier verschiedene Innendurchmesser des Hohlkörpers 3) einstellbar ist, hat das Einstellmittel, zum Beispiel eine entlang der optischen Achse 19 verstellbare Frontlinse 39. Derartige Einstellmittel sind in der Optik bekannt und deshalb der Einfachheit halber hier nicht dargestellt.

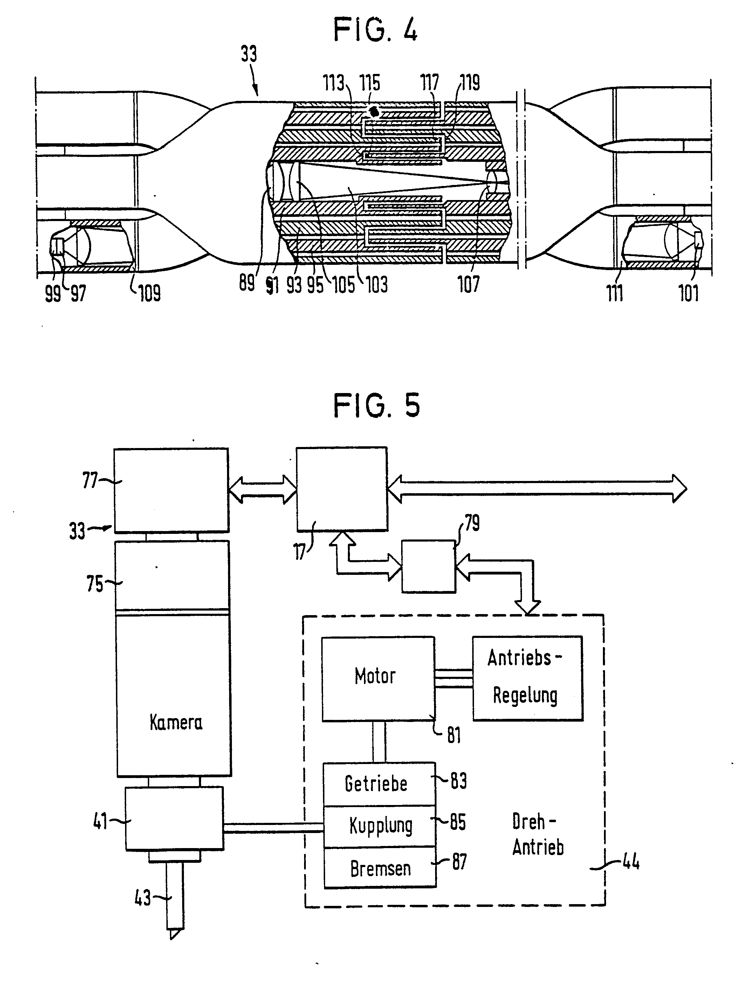

Bei der dargestellten Ausführungsform sind der Zeilensensor 23 und das optische Abbildungssystem 11 in einem Kamerakopf 41 geschützt angeordnet, und zwar in einem zum Kamerakopf 41 gehörigen verhältnismäßig engen Rohr 43, das für endoskopische Zwecke besonders geeignet ist. Von dem erfaßten Gegenstandsbereich 13 geht der abbildende Strahlengang durch das die Eintrittsluke bildende Umlenkprisma 37. Der Kamerakopf 41 ist um die Panoramaachse 1 drehantreibbar an einem nicht dargestellten Kamerakörper gelagert, und der Zeilensensor 23 ist in dem Kamerakopf 41 fest angeordnet. Dadurch kann der (in Fig. 1 nicht dargestellte) Drehantrieb 44 (Fig. 5) robust und leicht zugänglich ausgeführt werden. Es ist leicht möglich, den Kamerakopf 41 an dem nicht dargestellten Kamerakörper axialbeweglich zu lagern. Das ist für industrielle Anwendungen vorteilhaft, weil dann der (nicht dargestellte) Kamerakörper fest an einer Maschine angeordnet werden kann.

Um eine eindeutige Zuordnung zwischen der Erzeugung der Videosignale und der Bewegung des Zeilensensors 23 sicherzustellen, insbesondere auch in Beschleunigungs- und Bremsphasen, können geeignete Synchronisiermittel angewandt werden. In Fig. 1 ist als einfache Ausführungsform einer derartigen Synchronisiereinrichtung eine Codierscheibe 45 angedeutet, die an dem drehbaren Kamerakopf 41 befestigt ist und von einem nicht mitgedrehten Synchron-Sensor 47 abgelesen wird. Durch derartige Synchronisiermittel kann auch die Erzeugung der Videosignale auf ausgewählte Teilbereiche des von der Kamera erfaßten Panoramas beschränkt werden.

Um sicherzustellen, daß in den erzeugten Videosignalen keine systematischen Fehler durch Ungleichmäßigkeiten der Gegenstandsbeleuchtung und/oder der Empfindlichkeiten der optisch-elektrischen Wandler 27 des Zeilensensors 23 auftreten, können die Wandler des Zeilensensors in ihren Empfindlichkeiten einzeln einstellbar sein. Diese Maßnahme ist zwar grundsätzlich einfach, kann aber einen beträchtlichen Aufwand erfordern, wenn eine hohe Auflösung gewünscht wird und eine entsprechend große Anzahl von Wandlern pro Längeneinheit des Zeilensensors vorgesehen ist. Beispielsweise sind Zeilensensoren bekannt, bei denen etwa eintausend Wandler in einer Zeile von 1 cm Länge vorhanden sind. Das ist für eine gute Bildauflösung auch erforderlich. Es ist deshalb meist einfacher, den Gegenstandsbereich mit einer Beleuchtungseinrichtung zu beleuchten, bei der die in dem Gegenstandsbereich erzeugte Beleuchtungsstärken-Verteilung veränderbar ist. Besonders einfach ist dies durch Einschalten eines optischen Verlauffilters möglich. Jedenfalls soll die Beleuchtungseinrichtung derart einstellbar sein, daß bei einem strukturlosen Gegenstandsbereich 13 die Signale aller Wandler 27 gleich sind. Dann ist sichergestellt, daß eine sich in den erzeugten Videosignalen darstellende Helligkeitsstruktur nur von Ungleichmäßigkeiten in der Oberfläche des Gegenstandes herrührt. Insbesondere bei hoher Bildauflösung, also einer großen Anzahl von optisch-elektrischen Wandlern pro Längeneinheit des Zeilensensors, ist die pro Wandler zur Verfügung stehende Eingangsleistung nur sehr klein. Um ein genügend großes Signal-Rausch-Verhältnis zu erzielen und einen hohen Kontrast eines aus den Videosignalen erzeugten Videobildes sicherzustellen, muß man mit hoher Beleuchtungsstärke arbeiten. Das ist bei der dargestellten Ausführungsform dadurch erreicht, daß an einer von dem engen Rohr 43 entfernten Stelle, wo genügend Platz zur Verfügung steht, eine leistungsfähige Lampe 49, zum Beispiel eine Wolfram-Halogen-Lampe oder eine Gasentladungslampe angeordnet ist. Ein Kondensor 51 erfaßt einen möglichst großen Teil des von der Lampe gelieferten Lichtstromes und leitet diesen in ein Einkoppelprisma 53 am Anfang eines Lichtleit-Faserkabels 55 ein. Am anderen Ende des Faserkabels 55 wird der Lichtstrom über ein Auskoppelprisma 57 und eine Zylinderlinse 59 zu dem Gegenstandsbereich 13 geleitet. Die Zylinderlinse 59 ist dicht neben der Ablenkeinrichtung 37 angeordnet. Das beleuchtete Flächenstück ist möglichst nur geringfügig größer als der abzubildende Gegenstandsbereich 13. In dem Beleuchtungs-Strahlengang ist ein optisches Verlauffilter 61 angeordnet, das so ausgebildet ist, daß bei einem strukturlosen Gegenstandsbereich die von den optisch-elektrischen Wandlern 27 gelieferten Signale gleich groß sind.

Ein hohes Signal-Rausch-Verhältnis kann ferner dadurch erzielt werden, daß man die optisch-elektrischen Wandler 27 kühlt. Dafür ist bei der dargestellten Ausführungsform eine Kühleinrichtung 63 vorgesehen. Diese enthält einen Peltier-Modul 65, der eine mit dem Zeilensensor 23 über einen Metallblock 67 wärmeleitend verbundene kalte Seite und eine mit einem anliegenden Kühlkörper 71 wärmeleitend verbundene warme Seite aufweist. Der Kühlkörper 71 kann allein durch seine Wärmekapazität wirken oder seinerseits von einem ihn mit geringem Abstand umgebenden stationären äußeren Kühlmantel (nicht dargestellt) gekühlt werden, der in irgendeiner Weise gekühlt wird, zum Beispiel mittels Kühlwasser. Um ein Beschlagen von optischen Grenzflächen zu verhindern, können die daran angrenzenden Räume, insbesondere aber auch der ganze Kamerakopf 41, nach außen abgedichtet und mit einem trockenen Gas gefüllt sein.

Die Stromzufuhr für die Beleuchtungseinrichtung und den Peltier-Modul 65 erfolgt über nicht dargestellte Mittel, zum Beispiel Schleifringe oder Induktionsspulen.

Die Auslesesignale für den Zeilensensor 23 und die von dem Zeilensensor gelieferten primären Bildsignale werden, ggf. nach Vorverarbeitung in dem Kamerakopf 41, über die mehrkanalige berührungsfreie optische Drehkupplung 33 von und zu der Betriebsschaltung 17 übertragen. Diese Kupplung 33 enthält zwei relativ zueinander gedrehte Kupplungshälften 75, 77. Von der Betriebsschaltung 17 kommen Steuersignale zum Zeilensensor 23 und zu einer Ablaufsteuerung 79 für den Drehantrieb 44. Letzterer besteht aus einem Motor 81, einem Getriebe 83, einer Kupplung 85 und Bremsen 87.

Fig. 4 erläutert den Aufbau der Drehkupplung 33 näher. Die Drehkupplung ist als optische Kupplung mit mehreren konzentrischen Lichtkanälen 89, 91, 93 und 95 ausgebildet. An den Eingängen der Lichtkanäle sind optische Sender angeordnet. In Fig. 4 sind nur ein derartiger Sender 97 und ein Ansteuerverstärker 99 für den Lichtkanal 91 dargestellt. Die Lichtkanäle sind an ihren Ausgängen mit optisch-elektrischen Empfängern und zugeordneten Verstärkern versehen. Die optischen Sender sind vorzugsweise als Laser-Diode oder Leuchtdiode für sichtbares oder ultrarotes Licht ausgebildet. Die optischen Empfänger können als wirksames Element beispielsweise eine Avalanche- oder p-i-n-Fotodiode aufweisen. In Fig. 4 ist nur ein Empfänger 101 angedeutet.

Der erste Lichtkanal 89 ist in einem zentralen geteilten Rohr 103 angeordnet. Ein optisches Beleuchtungssystem aus einem Kondensor 105 und einer Feldlinse 107 sorgt für eine gleichmäßige Beleuchtung des (nicht dargestellten) zugeordneten Empfängers. Das zentrale Rohr 103 ist durch Blenden (nicht dargestellt) oder dergleichen lichtdicht ausgeführt. Die weiteren Lichtkanäle oder Übertragungsstrecken enthalten jeweils ein geteiltes Faser-Ringbündel mit kreisförmigen Endflächen in Hülsen. Die zugehörigen optischen Sender und Empfänger, zum Beispiel der in der Fig. 4 dargestellte Sender 97 bzw. Empfänger 101, sind zusammen mit den zugehörigen Ein- und Auskoppeloptiken und Verstärkern in steckbaren Hülsen, zum Beispiel 109, 111 angeordnet. Auf diese Weise kann die Übertragungsrichtung leicht umgekehrt werden. Die Lichtkanäle sind gegeneinander abgeschirmt, um ein Übersprechen möglichst weitgehend zu verhindern. Außerdem sind zur Verbesserung der Übersprechdämpfung die zu verschiedenen Kanälen gehörigen Paare von Endflächen in Axialrichtung gegeneinander versetzt, so zum Beispiel die in Fig. 4 dargestellten Paare 113, 115 und 117, 119. Ferner wird die Übersprechdämpfung noch dadurch weiter verbessert, daß die optischen Sender benachbarter Kanäle zur Erzeugung von verschiedenen Licht-Trägerfrequenzen ausgelegt sind. Zusätzlich sind auf der zu der Betriebsschaltung 17 führenden Seite der Drehkupplung 33 die Lichtkanäle über optische Filter an die Betriebsschaltung angeschlossen. Dadurch wird die Übersprechdämpfung noch weiter verbessert.

Beispielsweise ist eine Trennung der Lichtkanäle nach Wellenlängen folgendermaßen möglich:

Kanal 89 : Sender IRED 900 nm, Halbwertsbreite 50 nm,
Empfänger mit IR-durchlässigem Verlauffilter 800 nm.

Kanal 91 : Sender LED 670 nm, Halbwertsbreite 50 nm,
Empfänger mit IR-undurchlässigem Kantenfilter 700 nm.

Weitere Kanäle werden abwechselnd wie die Kanäle 89 und 91 bestückt. Auf diese Weise sind benachbarte Übertragungskanäle doppelt gegen Übersprechen geschützt.

**Patentansprüche**

1. Fernsehkamera für digitale On-line-Bildauswertung, mit einem optischen Abbildungssystem, das einen von der Kamera erfaßten Gegenstandsbereich in einem elementweise abtastbaren Bildbereich abbildet, und einer Betriebsschaltung, die aus den beim Abtasten gewonnenen Signalen Videosignale erzeugt, wobei die Kamera einen in dem optischen Bildbereich (15) angeordneten Zeilensensor (23) aufweist, der sich aus Sensorflächen (25) einer Reihe von optisch-elektrischen Wandlern (27) derart zusammensetzt, daß die Sensorflächen in den optischen Bildern von entsprechend gegeneinander versetzten Elementen (29) des Gegenstandsbereichs (13) liegen und bei Bewegung des Zeilensensors relativ zu dem Gegenstandsbereich senkrecht zur Erstreckung des Zeilensensors jede Sensorfläche (25) eine Abtastzeile (31) definiert, dadurch gekennzeichnet, daß zum Erfassen eines um eine Panoramaachse (1) herum verteilten optischen Gegenstandes (9) und zum Erzeugen der Relativbewegung der Zeilensensor (23) um das optische Bild (21) der Panoramaachse (1) drehantreibbar ist und derart angeordnet ist, daß die Sensorflächen in den optischen Bildern von axial gegeneinander versetzten Elementen (29) des Gegenstandsbereichs (13) liegen und bei der Drehung des Zeilensensors jede Sensorfläche (25) eine zu der Panoramaachse (1) rotationssymmetrische Abtastzeile (31) definiert, und daß der Ausgang des Zeilensensors (23) über eine mehrkanalige berührungslose optische Drehkupplung (33) mit der Betriebsschaltung (17) verbunden ist.

2. Kamera nach Anspruch 1, dadurch gekennzeichnet, daß die Achse (19) des Abbildungssystems (11) koaxial zur Panoramaachse (1) angeordnet ist.

3. Kamera nach Anspruch 1 oder 2, dadurch gekennzeichnet, daß das optische Abbildungssystem eine optische Umlenkeinrichtung (37) aufweist, die den abbildenden Strahlengang um 90° in die optische Achse (19) hinein abknickt.

4. Kamera nach einem der vorhergehenden Ansprüche, dadurch gekennzeichnet, daß das optische Bild (21) der Panoramaachse koaxial zu der Panoramaachse (1) angeordnet ist.

5. Kamera nach einem der vorhergehenden Ansprüche, dadurch gekennzeichnet, daß das optische Abbildungssystem (11) in einem Kamerakopf (41) geschützt angeordnet ist, und daß der Kamerakopf (41) um die Panoramaachse (1) drehantreibbar ist und das optische Abbildungssystem (11) und der Zeilensensor (23) in dem Kamerakopf (41) fest angeordnet sind.

6. Kamera nach Anspruch 5, dadurch gekennzeichnet, daß der Kamerakopf (41) an der Kamera in Richtung der Panoramaachse (1) axial bewegbar gelagert ist.

7. Kamera nach einem der vorhergehenden Ansprüche, gekennzeichnet durch Synchronisiermittel, die zwischen der Bewegung des Zeilensensors (23) und der Erzeugung der Videosignale wirksam sind.

8. Kamera nach einem der vorhergehenden Ansprüche, mit einer Beleuchtungseinrichtung für die Beleuchtung des Gegenstandsbereichs, dadurch gekennzeichnet, daß die von der Beleuchtungseinrichtung in dem Gegenstandsbereich (13) erzeugte Beleuchtungsstärken-Verteilung derart einstellbar ist, daß bei einem strukturlosen Gegenstandsbereich (13) die Signale aller Wandler (27) gleich sind.

9. Kamera nach einem der vorhergehenden Ansprüche, dadurch gekennzeichnet, daß die Drehkupplung (33) als optische Kupplung mit mehreren konzentrischen Lichtkanälen (89, 91, 93, 95) ausgebildet ist, daß in jedem Lichtkanal ein Paar von sich berührungslos gegenüberliegenden Endflächen vorgesehen ist, über die die Strahlung übertragen wird, und daß in den Eingängen und Ausgängen der Lichtkanäle jeweils ein elektrisch-optischer Sender mit Ansteuerverstärker bzw. ein optisch-elektrischer Empfänger vorgesehen sind.

10. Kamera nach einem der vorhergehenden Ansprüche, dadurch gekennzeichnet, daß sie einen Bestandteil eines Endoskops bildet.

## Claims

1. Television camera for on-line digital image processing, comprising an optical imaging system for imaging a camera-captured object area in an element-wise scannable image area, and an operating circuit for producing video signals from the signals generated by scanning, the camera including a line sensor (23) arranged in the optical image area (15) and composed of sensor surfaces (25) of a series of opto-electrical transducers (27) such that the sensor surfaces lie in the optical images of correspondingly relatively offset elements (29) of the object area (13) and that each sensor surface (25) defines a scanning line (31) when the line sensor is moved relative to the object area perpendicular to the direction in which the line sensor extends, characterized in that, for capturing an optical object (9) distributed about a panorama axis (1) and for producing the relative movement, the line sensor (23) is rotationally drivable around the optical image (21) of the panorama axis (1) and arranged such that the sensor surfaces lie in the optical images of axially relatively offset elements (29) of the object area (13), that each sensor surface (25) defines a rotationally symmetrical scanning line (31) upon rotation of the line sensor, and that the output of the line sensor (23) is connected to the operating circuit (17) through a multi-channel contactless optical rotary coupling (33).

2. Camera as in claim 1, characterized in that the axis (19) of the imaging system (11) is arranged coaxially to the panorama axis (1).

3. Camera as in claim 1 or 2, characterized in that the optical imaging system includes an optical deflecting means (37) which breaks the imaging beam path by 90° into the optical axis (19).

4. Camera as in any of the preceding claims, characterized in that the optical image (21) of the panorama axis is arranged coaxially to the panorama axis (1).

5. Camera as in any of the preceding claims, characterized in that the optical imaging system (11) is protectedly arranged in a camera head (41), that the camera head (41) is rotationally drivable about the panorama axis (1), and that the optical imaging system (11) and the line sensor (23) are fixedly arranged within the camera head (41).

6. Camera as in claim 5, characterized in that the camera head (41) is mounted on the camera for axial movement in the direction of the panorama axis (1).

7. Camera as in any of the preceding claims, characterized by synchronizing means effective between the movement of the line sensor (23) and the production of the video signals.

8. Camera as in any of the preceding claims, comprising an illumination means for illuminating the object area, characterized in that the luminous intensity distribution produced in the object area (13) by the illumination means is settable such that the signals of all transducers (27) are equal in the case of a structureless object area (13).

9. Camera as in any of the preceding claims, characterized in that the rotary coupling (33) is formed as an optical coupling having a plurality of concentric light channels (89, 91, 93, 95), that each light channels has provided therein a pair of end surfaces which are opposedly arranged in non-contact fashion and through which the radiation is transmitted, and that the inlets and outlets of the light channels have each arranged therein an electrooptical transmitter comprising an activation amplifier and an opto-electrical receiver, respectively.

10. Camera as in any of the preceding claims, characterized in that it is part of an endoscope.

**Revendications**

1. Caméra de télévision pour le traitement en ligne d'un signal d'image numérique, comportant un système optique de formation d'image qui forme une image d'une zone d'objet prise par la caméra, dans une zone d'image pouvant être balayée élément par élément, et un circuit d'exploitation qui engendre des signaux vidéo à partir des signaux obtenus lors du balayage, cette caméra comportant également un capteur de lignes (23) disposé dans la zone d'image optique (15) et composé de surfaces sensibles (25) d'une rangée de convertisseurs électro-optiques (27) de telle manière que les surfaces sensibles coïncident avec les images optiques d'éléments (29) de la zone d'objet (13), décalés de façon correspondantes les uns par rapport aux autres et que, pendant le mouvement relatif du capteur de lignes par rapport à la zone d'objet perpendiculairement à l'étendue du capteur de lignes, chaque surface sensible (25) définisse une ligne de balayage (31), caractérisée en ce que, dans le but de prendre un objet réparti autour d'un axe panoramique (1) et d'engendrer le mouvement relatif, le capteur de lignes (23) est agencé de manière à pouvoir être entraîné en rotation autour de l'image optique (21) de l'axe panoramique (1) de telle manière que les surfaces sensibles coïncident avec les images optiques d'éléments (29) de la zone d'objet (13) décalés axialement les uns par rapport aux autres et que, pendant la rotation du capteur de lignes, chaque surface sensible (25) définisse une ligne de balayage (31) ayant une symétrie de révolution par rapport à l'axe panoramique (1), et en ce que la sortie du capteur de lignes (23) est reliée au circuit d'exploitation (17) par l'intermédiaire d'un coupleur optique tournant (33) sans contact et à plusieurs canaux.

2. Caméra suivant la revendication 1, caractérisée en ce que l'axe (19) du système de formation d'image (11) coïncide avec l'axe panoramique (1).

3. Caméra suivant la revendication 1 ou 2, caractérisée en ce que le système optique de formation d'image comprend un dispositif optique de déviation (37) qui dévie le faisceau de formation de l'image de 90° vers l'axe optique (19).

4. Caméra suivant l'une des revendications précédentes, caractérisée en ce que l'image optique (21) de l'axe panoramique est disposée coaxialement à cet axe (1).

5. Caméra suivant l'une des revendications précédentes, caractérisée en ce que le système optique de formation d'image (11) est monté, de façon protégée, dans une tête de caméra (41), et en ce que la tête de caméra (41) est montée de manière à pouvoir être entraînée en rotation autour de l'axe panoramique (1), le système optique de formation d'image (11) et le capteur de lignes (23) étant montés fixes dans la tête de caméra (41).

6. Caméra suivant la revendication 5, caractérisée en ce que la tête de caméra (41) est fixée sur elle de manière à être mobile axialement selon l'axe panoramique (1).

7. Caméra suivant l'une des revendications précédentes, caractérisée en ce qu'elle comprend des moyens de synchronisation qui agissent entre le mouvement du capteur de lignes (23) et la formation des signaux vidéo.

8. Caméra suivant l'une des revendications précédentes, comprenant un dispositif d'éclairement destiné à éclairer la zone d'objet, caractérisée en ce que la répartition de l'intensité lumineuse engendrée par le dispositif d'éclairement dans la zone d'objet (13) est réglable de telle manière qu'en présence d'une zone d'objet (13) dépourvue de structure, les signaux de tous les convertisseurs (27) soient égaux.

9. Caméra suivant l'une des revendications précédentes, caractérisée en ce que le coupleur tournant (33) est réalisé sous la forme d'un coupleur optique présentant plusieurs canaux optiques concentriques (89, 91, 93, 95), en ce que, dans chaque canal de lumière est prévue une paire de surfaces d'extrémité en regard sans contact par l'intermédiaire desquelles est transmis le rayonnement, et en ce qu'à chaque entrée et à chaque sortie des canaux de lumière sont respectivement prévus un émetteur electro-optique avec un amplificateur de commande et un récepteur électrooptique.

10. Caméra suivant l'une des revendications précédentes, caractérisée en ce qu'elle forme partie d'un endoscope.

FIG. 1

FIG. 2

FIG. 3

# FIG. 4

# FIG. 5